# EUROPEAN PATENT APPLICATION

(11) **EP 4 686 633 A1**
(43) Date of publication of application: **04.02.2026**
(21) Application number: 24191358.1
(22) Date of filing: 29.07.2024
(51) Int. Cl.: B60W 50/02

(54) **VERIFICATION OF MOTION CONTROL SYSTEMS FOR A VEHICLE**

(71) Applicant: VOLVO TRUCK CORPORATION, 405 08 Göteborg (SE)
(72) Inventor: PATIL, Dhiraj Ravindra, 414 75 GÖTEBORG (SE); HENDERSON, Leon, 438 92 HÄRRYDA (SE)
(74) Representative: Ström & Gulliksson AB

(57) **Abstract**

A computer system and computer-implemented method for verifying primary and secondary motion control systems of an automated or semi-automated vehicle are disclosed. A computer system comprises processing circuitry configured to: send a manoeuvring request to each of the primary motion control system and the secondary motion control system, acquire a first response to the manoeuvring request for the primary motion control system, acquire a second response to the manoeuvring request for the secondary motion control system, and determine if each of the first and second responses are within a threshold of a reference response, wherein the reference response is based on the respective manoeuvring request and/or the other of the acquired first and second responses.

## Description

### TECHNICAL FIELD

The disclosure relates generally to vehicle control. In particular aspects, the disclosure relates to verification of motion control systems for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In vehicle motion management, a motion control system of a vehicle may include a controller configured to determine control signals for actuators of the vehicle and one or more actuators (for example electrical machines, brake systems, and the like) configured to implement the control signals in order to satisfy the requested global forces of the vehicle. For example, a motion control system may receive an input related to a manoeuvre for the vehicle and state information of the vehicle comprising motion parameters and determine control signals in the form of propulsion and/or braking instructions to meet the requested global forces of the vehicle subject to certain constraints, for example energy and safety constraints. These control signals may then be implemented by actuators to provide the requested motion (i.e. cause the vehicle to perform the manoeuvre).

In some implementations, a vehicle may comprise a number of different motion control systems, for example propulsion systems, braking systems, and/or steering systems. Each of these different motion control systems may be comprised of a primary motion control system configured to operate under normal conditions, and one or more secondary systems configured to provide redundancy and operate, for example, in the case of a fault with the primary system.

The motion control systems need to be checked to make sure they are working fully, for example before a mission is started. The checks are typically performed manually, which takes time and requires expert knowledge of the vehicle systems.

It is therefore desired to develop a solution for vehicle motion management that addresses or at least mitigates some of these issues.

### SUMMARY

This disclosure provides systems, methods and other approaches for verifying primary and secondary motion control systems of an automated or semi-automated vehicle. In particular, a manoeuvring request is sent to both primary and secondary motion control systems of a vehicle. Responses to the request are acquired for both the primary and the secondary system, which are evaluated to determine if they are within a certain threshold from the request and/or within a certain threshold from each other. This allows the primary and secondary motion control systems to be crosschecked and calibrated if necessary. By using the secondary motion control systems to crosscheck the primary motion control systems (and vice versa), systemic faults affecting all systems, as well as faults within individual subsystems, may be detected. As a result, the time needed prior to starting an automated driving mission, the risk of human errors, and the need for expert knowledge of the vehicle systems are reduced.

According to a first aspect of the disclosure, there is provided a computer system for verifying primary and secondary motion control systems of an automated or semi-automated vehicle, the computer system comprising processing circuitry configured to: send a manoeuvring request to each of the primary motion control system and the secondary motion control system, acquire a first response to the manoeuvring request for the primary motion control system, acquire a second response to the manoeuvring request for the secondary motion control system, and determine if each of the first and second responses are within a threshold of a reference response, wherein the reference response is based on the respective manoeuvring request and/or the other of the acquired first and second responses.

The first aspect of the disclosure may seek to enable primary and secondary motion control systems of a vehicle to be crosschecked and calibrated if necessary. By using the secondary motion control systems to crosscheck the primary motion control systems (and vice versa), systemic faults affecting all systems, as well as faults within individual subsystems, may be detected. As a result, the time needed prior to starting an automated driving mission, the risk of human errors, and the need for expert knowledge of the vehicle systems are reduced.

Optionally in some examples, including in at least one preferred example, the primary and secondary motion control systems comprise steering systems. A technical benefit may include that steering systems can be specifically crosschecked and calibrated if necessary.

Optionally in some examples, including in at least one preferred example, the manoeuvring request comprises a steering angle for the primary steering system that is equal in magnitude and opposite in direction to a steering angle for the secondary steering system. A technical benefit may include that the steering systems can be tested simultaneously whilst providing a resultant steering angle that is near zero, meaning the testing can be performed during straight line driving.

Optionally in some examples, including in at least one preferred example, the manoeuvring request comprises a steering angle for the primary steering system that is equal in magnitude and direction to the steering angle for the secondary steering system. A technical benefit may include that the steering systems can be tested based on identical requests, meaning the responses can be compared to a single reference response or directly to each other to identify any errors.

Optionally in some examples, including in at least one preferred example, the manoeuvring request comprises a steering angle for the front axle of the vehicle. A technical benefit may include that steering systems that are already present on existing vehicles can be crosschecked.

Optionally in some examples, including in at least one preferred example, the primary and secondary motion control systems comprise braking systems. A technical benefit may include that braking systems can be specifically crosschecked and calibrated if necessary.

Optionally in some examples, including in at least one preferred example, the manoeuvring request comprises a braking request for one of the primary and secondary braking systems and a subsequent braking request for using the other of the primary and secondary braking systems. A technical benefit may include that the braking requests can be implemented separately, ensuring that the respective responses do not interfere with each other.

Optionally in some examples, including in at least one preferred example, the braking requests are to be implemented while the vehicle is accelerating. A technical benefit may include that both propulsive and braking torque can be applied at the same time.

Optionally in some examples, including in at least one preferred example, the acquired responses comprise information relating to one or more or of an implemented wheel speed, an implemented steering torque, an implemented steering angle, resultant accelerometer data, and resultant yaw rate data. A technical benefit may include that various different parameters of vehicle motion may be studied to observe different behaviours of the motion control systems and identify faults accordingly.

Optionally in some examples, including in at least one preferred example, a reference response for the primary motion control system is based on the manoeuvring request for the primary motion control system and/or the second response, and a reference response for the secondary motion control system is based on the manoeuvring request for the secondary motion control system and/or the first response. A technical benefit may include that systemic faults affecting all systems, as well as faults within individual subsystems, may be detected.

Optionally in some examples, including in at least one preferred example, the threshold comprises an absolute value or a value determined relative to the reference response. A technical benefit may include that fault identification can be performed based on either physical and/or regulatory limits or in the context of the current vehicle motion.

According to a second aspect of the disclosure, there is provided a vehicle comprising the computer system of any preceding claim. The second aspect of the disclosure may seek to provide a vehicle capable of crosschecking primary and secondary motion control systems. In this way, systemic faults affecting all systems, as well as faults within individual subsystems, may be detected.

According to a third aspect of the disclosure, there is provided a computer-implemented method for verifying primary and secondary motion control systems of an automated or semi-automated vehicle, the computer-implemented method comprising: sending, by processing circuitry of a computer system, a manoeuvring request to each of the primary motion control system and the secondary motion control system, acquiring, by the processing circuitry, a first response to the manoeuvring request for the primary motion control system, acquiring, by the processing circuitry, a second response to the manoeuvring request for the secondary motion control system, and determining, by the processing circuitry, if each of the first and second responses are within a threshold of a reference response, wherein the reference response is based on the manoeuvring request and/or the other of the acquired first and second responses.

The third aspect of the disclosure may seek to enable primary and secondary motion control systems of a vehicle to be crosschecked and calibrated if necessary. By using the secondary motion control systems to crosscheck the primary motion control systems (and vice versa), systemic faults affecting all systems, as well as faults within individual subsystems, may be detected. As a result, the time needed prior to starting an automated driving mission, the risk of human errors, and the need for expert knowledge of the vehicle systems are reduced.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to crosscheck primary and secondary motion control systems. In this way, systemic faults affecting all systems, as well as faults within individual subsystems, may be detected.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to crosscheck primary and secondary motion control systems. In this way, systemic faults affecting all systems, as well as faults within individual subsystems, may be detected.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** schematically shows a side view of a vehicle according to an example.
**FIG. 2** is a signalling diagram according to an example
**FIG. 3** is a flow chart of a computer-implemented method according to an example.
**FIG. 4** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

In some implementations, a vehicle may comprise a number of different motion control systems, for example propulsion systems, braking systems, and/or steering systems. Each of these different motion control systems may be comprised of a primary motion control system configured to operate under normal conditions, and one or more secondary systems configured to provide redundancy and operate, for example, in the case of a fault with the primary system. The motion control systems need to be checked to make sure they are working fully, for example before a mission is started. The checks are typically performed manually, which takes time and requires expert knowledge of the vehicle systems.

To remedy this, systems, methods and other approaches are provided for verifying primary and secondary motion control systems of an automated or semi-automated vehicle. In particular, a manoeuvring request is sent to both primary and secondary motion control systems of a vehicle. Responses to the request are acquired for both the primary and the secondary system, which are evaluated to determine if they are within a certain threshold from the request and/or within a certain threshold from each other. This allows the primary and secondary motion control systems to be crosschecked and calibrated if necessary. By using the secondary motion control systems to crosscheck the motion control systems (and vice versa), systemic faults affecting all systems, as well as faults within individual subsystems, may be detected. As a result, the time needed prior to starting an automated driving mission, the risk of human errors, and the need for expert knowledge of the vehicle systems are reduced.

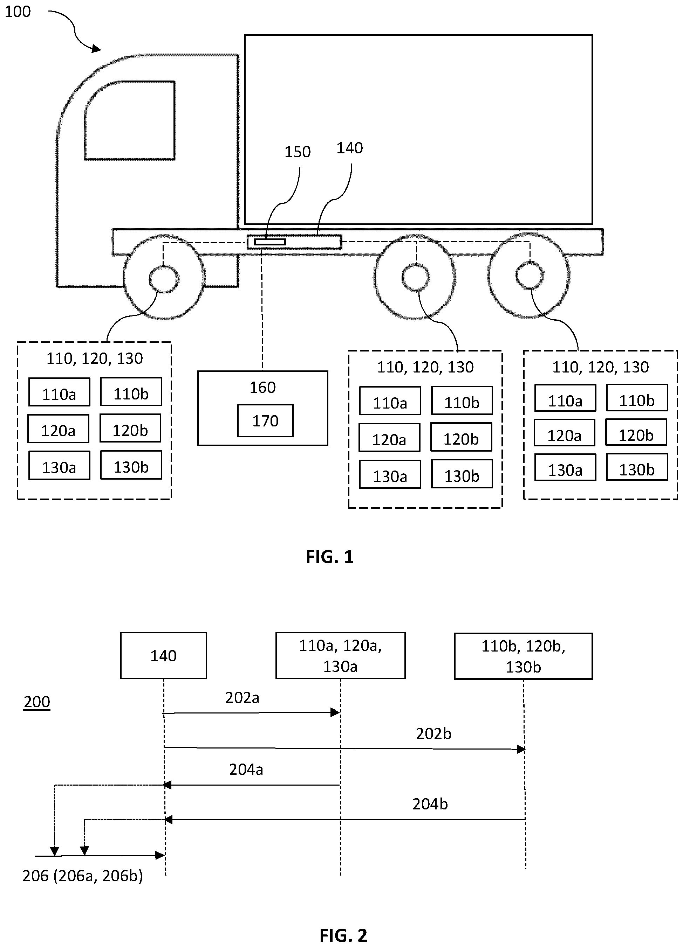

**FIG.** 1 schematically shows a side view of an example vehicle **100** of the type considered in this disclosure. The vehicle **100** may be any suitable form of vehicle. For example, the disclosure can be applied in heavy-duty vehicles, such as trucks, buses, construction equipment, and multi-unit vehicle combinations, in personal vehicles such as cars, vans, or motorbikes, or in any other suitable form of vehicle. The vehicle **100** comprises a number of axles, each generally having two or more wheels **110.** Whilst three axles are shown, it will be appreciated that any suitable number of axles may be provided. It will also be appreciated that any number of the axles may be driven axles.

In some examples, the vehicle **100** may be a vehicle combination comprising a number of units, including a tractor unit and at least one trailing unit. A tractor unit is generally the foremost unit in a vehicle combination, and may comprise the cabin for the driver, including steering controls, dashboard displays and the like. Generally, the tractor unit is used to provide propulsion power for the vehicle combination **100.** A trailing unit is generally used to store goods that are being transported by the vehicle combination **100.** A trailing unit may be a truck, trailer, dolly and the like. A trailing unit may also provide propulsion to the vehicle combination **100.**

The vehicle **100** may comprise one or more motion control systems. The motion control systems are configured to enable and control motion of the vehicle **100.** Each motion control system may be associated with an axle and/or wheel of the vehicle **100,** or a group of axles and/or wheels. The motion control systems may comprise one or more propulsion systems **110,** one or more braking systems **120,** and one or more steering systems **130.** In examples where the vehicle **100** is a vehicle combination, each unit may comprise its own motion control systems **110, 120, 130.**

Each of the motion control systems **110, 120, 130** may comprise a primary motion control system **110a, 120a, 130a** and a secondary motion control system **110b, 120b, 130b.** A primary motion control system is configured to enable and control motion of the vehicle **100** during normal operation. A secondary (back-up) motion control system provides redundancy for the functions of the primary motion control system, and may be used if and when the primary controller motion control system fails (for example to continue the vehicle's mission or to enable a safe stop manoeuvre to be performed).

The one or more propulsion systems **110** may comprise one or more sources of propulsion. For example, the propulsion systems **110** may comprise one or more electrical machines such as electric motors and/or generators. The electrical machines are configured to drive, e.g. provide torque and/or steering to, one or more axles or individual wheels of the vehicle **100.** The electrical machines can supply either a positive (propulsion) or negative (braking) force. The vehicle **100** may comprise one or more batteries (not shown) configured to provide power to the electrical machines. Additionally or alternatively, the propulsion systems **110** may include another source of propulsion, for example an internal combustion engine (ICE). The vehicle **100** also comprises a drivetrain (not shown) to deliver mechanical power from the propulsion systems **110** to the wheels of the vehicle **100.**

As discussed above, the propulsion systems **110** may comprise a primary propulsion system **110a** and a secondary propulsion system **110b.** Each of the primary propulsion system **110a** and secondary propulsion system **110b** may comprise respective sources of propulsion such as electric motors, generators, and/or ICEs.

The one or more braking systems **120** may comprise one or more sets of service brakes. The service brakes can supply a negative (braking) force. The service brakes may be, for example, frictional brakes, such as pneumatic brakes, or hydraulic brakes. Pneumatic brakes use a compressor to fill the brake with air, which may be powered by the batteries. In some examples, the brakes may be electro-mechanical brakes. Additionally or alternatively, braking systems **120** may include one or more auxiliary brake systems. For example, the electrical machines of a propulsion system **110** can be used to supply a negative force. This is known as regenerative braking, in which case the electrical machines may be operated as generators, in order to recover energy during braking. The energy recovered from regenerative braking by the electrical machines can be stored in the batteries, and so regenerative braking may generally be preferred over using service brakes. Similarly, an ICE of a propulsion system **110** can be used to supply a negative force. This is known as engine braking, in which the retarding forces within the ICE are used to slow down the vehicle **100,** typically by either momentarily opening the exhaust valve near the top of the compression stroke to release compressed air, turning the engine into an air compressor and creating resistance, or partially closing a valve in the exhaust system to create back pressure, which slows the engine and the vehicle **100.** The braking systems **120** may further comprise a retarder brake system, for example hydraulic retarders or electric retarders, to provide additional braking force and help to control the speed of the vehicle **100,** especially during long downhill descents or in heavy traffic situations.

As discussed above, the braking systems **120** may comprise a primary braking system **120a** and a secondary braking system **120b.** Each of the primary braking system **120a** and secondary braking system **120b** may comprise respective brake systems such as electric service brakes and retarder brake systems. In some examples, certain components may be shared between the primary braking system **120a** and secondary braking system **120b,** such as anti-lock braking system (ABS) valves and sensors such as wheel speed sensors and/or pressure transducers.

The one or more steering systems **130** may comprise any system suitable for implementing a steering angle at one or more axles or wheels of the vehicle **100.** The one or more steering systems **130** may comprise steering actuators such as steering servo arrangements, which may be implemented as electro-hydraulic actuators. For example, one or more axles of the vehicle may be coupled to a respective steering actuator that is capable of implementing a steering angle at the axle. Additionally or alternatively, one or more wheels of the vehicle may be coupled to a respective steering actuator that is capable of implementing a steering angle at the individual wheel.

As discussed above, the steering systems **130** may comprise a primary steering system **130a** and a secondary steering system **130b.** Each of the primary steering system **130a** and secondary steering system **130b** may comprise respective steering actuators such as steering servo arrangements.

The vehicle **100** also includes a controller **140** comprising processing circuitry **150.** The controller **140** is configured to control components of the vehicle **100,** for example the motion control systems **110, 120, 130.** The controller **140** may be a microcontroller. In examples where the vehicle **100** is a vehicle combination, the vehicle **100** may include a global controller and a plurality of unit controllers, for example a controller for each unit. Vehicle motion management may therefore be available on a unit level to receive requests from a manual or virtual driver to coordinate the propulsion, braking and steering.

The controller **140** may receive control signals from a computer system **160** comprising processing circuitry **170.** The computer system **160** may be a vehicle control unit configured to perform various vehicle (unit) control functions, such as vehicle motion management. The computer system **160** may be local to the vehicle **100,** or may be a remote system, implemented at a distance from the vehicle **100.** The computer system **160** may be communicatively coupled to the controller **140** in any suitable way, for example via a circuit or any other wired, wireless, or network connection known in the art. Furthermore, the communicative coupling may be implemented as a direct connection between the controller **140** and the computer system **160,** or may be implemented as a connection via one or more intermediate entities. In this way, automated or semi-automated control of the vehicle 100 is enabled.

**FIG. 1** shows a common controller **140** for all motion control systems **110, 120, 130** of the vehicle **100,** however it will be appreciated that each motion control system **110, 120, 130** may have its own respective controller **140.** In these cases, the controller **140** may be implemented in the structure of the motion control system **110, 120, 130** itself. Similarly, each primary and secondary motion control system **110a-b, 120a-b, 130a-b** may have its own respective controller **140.** In one embodiment, the vehicle **100** may comprise a central controller **140** while each primary and secondary motion control system **110a-b, 120a-b, 130a-b** also has its own respective controller **140.** Each controller **140** may have a dedicated power supply.

The motion control systems **110, 120, 130** need to be checked to make sure they are working fully, for example before a mission is started. The checks are typically performed manually, which takes time and requires expert knowledge of the vehicle systems. To remedy this, systems, methods and other approaches are provided for verifying primary and secondary motion control systems of an automated or semi-automated vehicle.

**FIG. 2** is a signalling diagram illustrating a process for verifying primary and secondary motion control systems **110a-b, 120a-b, 130a-b.** Whilst **FIG. 2** illustrates communication between a central vehicle controller **140** and primary and secondary motion control systems **110a-b, 120a-b, 130a-b,** it will be appreciated that any suitable controller may be used (e.g., the computer system **160** described in relation to **FIG. 1****).**

The controller **140** sends a manoeuvring request to each of a primary motion control system **110a, 120a, 130a** and a corresponding secondary motion control system **110b, 120b, 130b.** For example, a manoeuvring request is sent to each of the primary and secondary propulsion systems **110a-b.** A manoeuvring request includes motion parameters to be implemented by the primary and secondary motion control systems **110a-b, 120a-b, 130a-b.** For example, the manoeuvring request may include a velocity, acceleration, force, and/or torque to be implemented by the primary and secondary propulsion systems **110a-b.** In the case of the primary and secondary braking systems **120a-b,** the manoeuvring request may include a (total vehicle) brake force, a wheel brake torque, a desired vehicle yaw moment, and/or a desired vehicle deceleration (for example comprising a corresponding brake pressure). In the case of the primary and secondary steering systems **130a-b,** the manoeuvring request may include a steering angle, a steering torque, and/or a desired path curvature for the vehicle.

As shown in **FIG. 2****,** a first manoeuvring request **202a** is sent to a primary motion control system **110a, 120a, 130a** and a second manoeuvring request **202b** is sent to a corresponding secondary motion control system **110b, 120b, 130b.** In some examples, the first and second manoeuvring requests **202a, 202b** are the same. That is to say, each of the primary motion control system **110a, 120a, 130a** and corresponding secondary motion control system **110b, 120b, 130b** receives the same manoeuvring request including the same motion parameters and values. In other examples, the first and second manoeuvring requests **202a, 202b** are different. For example, a first manoeuvring request **202a** for a primary steering system **130a** may comprises a steering angle that is equal in magnitude and opposite in direction to that included in a second manoeuvring request **202b** for a secondary steering system **130b,** as will be discussed below.

In some examples, the first and second manoeuvring requests **202a, 202b** are for the same axle (group) or wheel (group). For example, both manoeuvring requests **202a, 202b** may be for a particular wheel, axle, vehicle unit, or for the vehicle **100** as a whole. In other examples, the first and second manoeuvring requests **202a, 202b** are for different (groups of) axles or wheels. For example, the first manoeuvring request **202a** may be for a first wheel, axle, or vehicle unit, while the second manoeuvring request **202b** may be for a second wheel, axle, or vehicle unit.

In some examples, the first and second manoeuvring requests **202a, 202b** are to be implemented simultaneously. This may be useful in situations where space for manoeuvring the vehicle is limited. In other examples, the first and second manoeuvring requests **202a, 202b** are to be implemented sequentially. This may be advantageous where it is desired that responses to the respective requests do not interfere with each other. In some cases, both simultaneously and sequentially implemented requests may be employed in order to provide as much data as possible to diagnose any faults.

The controller **140** then receives a response to the manoeuvring request for each of the primary motion control system **110a, 120a, 130a** and the corresponding secondary motion control system **110b, 120b, 130b.** A response includes information relating to how the motion control systems **110a-b, 120a-b, 130a-b** have implemented the first and second manoeuvring requests **202a, 202b.** For example, a response may comprise information relating to one or more or of an implemented wheel speed, an implemented steering torque, an implemented steering angle, resultant accelerometer data, and resultant yaw rate data. Here, an implemented value is an allocated value (i.e. the value set by the motion control system **110a-b, 120a-b, 130a-b)** and a resultant value is a measured value, for example from sensors of the vehicle **100,** indicating the actual value that occurs based on an implemented command. As shown in **FIG. 2****,** a first response **204a** is received from a primary motion control system **110a, 120a, 130a** and a second response **204b** is received from a corresponding secondary motion control system **110b, 120b, 130b.** It will be appreciated that the responses **204a, 204b** may be received by the controller **140** via one or more intermediate systems.

The controller **140** may then analyse the first and second responses **204a, 204b** to determine if they are each within a threshold of a reference response **206.** The reference response **206** is based on the respective manoeuvring request **202a, 202b** and/or the other of the acquired first and second responses **204a, 204b.** For example, the reference response **206** may be an expected response and/or a response including values that indicate proper function of a motion control system **110a-b, 120a-b, 130a-b.** For example, the reference response **206** may be a response to the manoeuvring request **202a, 202b** generated by a vehicle model, or a historical response from a properly functioning system. In some examples, the reference response **206** may use values included in the initial manoeuvring request **202a, 202b.** It will be appreciated that a reference response **206a** for the primary motion control system **110a, 120a, 130a** may be determined based on the first manoeuvring request **202a,** while a reference response **206b** for the secondary motion control system **110b, 120b, 130b** may be determined based on the second manoeuvring request **202b,** and, in the case that the manoeuvring requests **202a, 202b** are the same, the reference responses **206a, 206b** will be the same. Alternatively, the reference response **206** may be the response **204a, 204b** received from the other motion control system **110a-b, 120a-b, 130a-b.** For example, it may be determined if the first response **204a** is within a threshold of the second response **204b,** and vice versa. By using the response **204a, 204b** received from the other motion control system **110a-b, 120a-b, 130a-b** as a reference response **206,** differences in function between primary and secondary systems can be detected. By using an expected response (e.g. a response generated by a vehicle model, or a historical response from a properly functioning system) as a reference response **206,** any global faults affecting both primary and secondary systems can be detected. It will be appreciated that both forms of reference response may be used in order to provide a full analysis.

If a response is within the threshold of the reference response **206,** it may be determined that the respective motion control system **110a-b, 120a-b, 130a-b** is functioning properly. In some embodiments, the threshold may be an absolute value. For example, it may be required that an implemented steering angle is within 5° of that in the reference response **206.** In some embodiments, the threshold may be determined relative to the reference response **206.** For example, it may be required that an implemented wheel speed is within 10% of that in the reference response **206.** If a response is outside the threshold of the reference response **206,** it may be determined that the respective motion control system **110a-b, 120a-b, 130a-b** is not functioning properly, and further action may be taken to diagnose the problem. Different thresholds may be used for different reference responses **206** as appropriate.

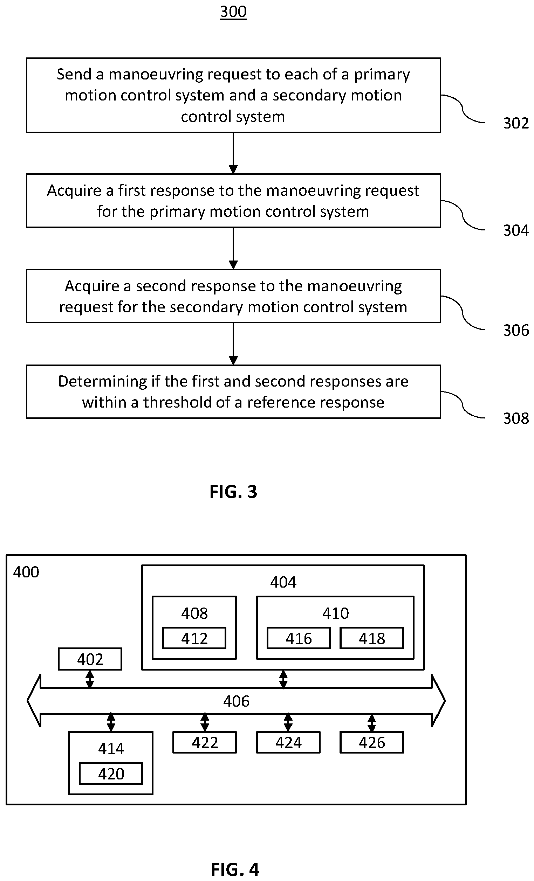

**FIG. 3** is a flow chart of a computer-implemented method **300** according to an example. The method **300** is for verifying primary and secondary motion control systems **110a-b, 120a-b, 130a-b** of an automated or semi-automated vehicle **100.** The method **200** enables primary and secondary motion control systems **110a-b, 120a-b, 130a-b** to be crosschecked and calibrated if necessary. The method **300** may be implemented by processing circuitry of a computer system (e.g., the processing circuitry **150** of the controller **140,** or the processing circuitry **170** of the computer system **160** described in relation to **FIG. 1****).**

At **302,** a manoeuvring request **202a, 202b** is sent to each of a primary motion control system **110a, 120a, 130a** and a corresponding secondary motion control system **110b, 120b, 130b.** The manoeuvring request includes motion parameters to be implemented by the primary and secondary motion control systems **110a-b, 120a-b, 130a-b.** In particular, a first manoeuvring request **202a** is sent to a primary motion control system **110a, 120a, 130a** and a second manoeuvring request **202b** is sent to a corresponding secondary motion control system **110b, 120b, 130b.** In some examples, the first and second manoeuvring requests **202a, 202b** are the same. In other examples, the first and second manoeuvring requests **202a, 202b** are different.

In the case of primary and secondary propulsion systems **110a-b,** the manoeuvring request **202a, 202b** may include a velocity, acceleration, force, and/or torque. In some examples, the first manoeuvring request **202a** is intended to be implemented before the second manoeuvring request **202b,** or vice versa. In some examples, the first and second manoeuvring requests **202a, 202b** may be implemented simultaneously and a combined response may be studied (e.g. a sum of accelerations applied by the respective propulsion systems **110a-b).**

In the case of primary and secondary braking systems **120a-b,** the manoeuvring request **202a, 202b** may include a (total vehicle) brake force, a wheel brake torque, a desired vehicle yaw moment, and/or a desired vehicle deceleration (for example comprising a corresponding brake pressure). In some examples, the first manoeuvring request **202a** is intended to be implemented before the second manoeuvring request **202b,** or vice versa. In some examples, the manoeuvring requests **202a, 202b** are to be implemented while the vehicle **100** is accelerating (i.e. both propulsive torque and braking torque are applied at the same time). In some examples, the first manoeuvring request **202a** is intended to be implemented on one side of the vehicle **100,** while the second manoeuvring request **202b** is intended to be implemented on the other side of the vehicle **100.** For example, the first manoeuvring request **202a** may include a brake torque for one or more right-side wheels of the vehicle **100,** while the second manoeuvring request **202b** may include a brake torque for one or more left-side wheels of the vehicle **100.** In this case, the yaw response should be equal and opposite if both systems are functioning properly (unless there is a global fault).

In the case of primary and secondary steering systems **130a-b,** the manoeuvring request **202a, 202b** may include a steering angle. In one example, the request may include a steering angle for the front axle of the vehicle **100.** In one example, a first manoeuvring request **202a** for a primary steering system **130a** may comprise a steering angle that is equal in magnitude and direction to that included in a second manoeuvring request **202b** for a secondary steering system **130b.** In this example, the first manoeuvring request **202a** is intended to be implemented before the second manoeuvring request **202b,** or vice versa. In another example, a first manoeuvring request **202a** for a primary steering system **130a** may comprise a steering angle that is equal in magnitude and opposite in direction to that included in a second manoeuvring request **202b** for a secondary steering system **130b.** In this example, the first and second manoeuvring requests **202a, 202b** are intended to be implemented simultaneously. In the case that the primary and secondary steering systems **130a-b** are on the same axle, it can then be checked if a resulting steering angle is within a suitable threshold of zero. In the case that the primary and secondary steering systems **130a-b** are on different axles, it can then be checked if a resulting yaw rate (or other suitable parameter) is within a suitable threshold of an expected value.

In some examples, the manoeuvring requests **202a, 202b** may be sent to the different types of motion control system **110, 120, 130** at different times in order that the respective responses do not to interfere with each other (e.g. the yaw rate of the vehicle may be affected by each of the different motion control system **110, 120, 130,** and so it can be challenging to know which system is causing the resultant motion). In other examples, the manoeuvring requests **202a, 202b** may be sent to different types of motion control system **110, 120, 130** simultaneously (e.g. to two or more types of motion control system **110, 120, 130).**

At **304,** a response **204a** for the primary motion control system **110a, 120a, 130a** is acquired. The response **204a** includes information relating to how the primary motion control system **110a, 120a, 130a** has implemented the first manoeuvring request **202a.** The response **204a** may comprise information relating to one or more or of a wheel speed implemented by the primary propulsion system **110a,** a steering torque implemented by the primary steering system **130a,** a steering angle implemented by the primary steering system **130a,** accelerometer data resulting from a command implemented by the primary propulsion or braking system **110a, 120a,** and yaw rate data resulting from a command implemented by the primary motion control system **110a, 120a, 130a.**

At **306,** a response **204b** for a corresponding secondary motion control system **110b, 120b, 130b** is acquired. The response **204b** includes information relating to how the secondary motion control system **110b, 120b, 130b** has implemented the second manoeuvring request **202b.** The response **204b** may comprise information relating to one or more or of a wheel speed implemented by the secondary propulsion system **110b,** a steering torque implemented by the secondary steering system **130b,** a steering angle implemented by the secondary steering system **130b,** accelerometer data resulting from a command implemented by the secondary propulsion or braking system **110b, 120b,** and yaw rate data resulting from a command implemented by the secondary motion control system **110b, 120b, 130b.**

At **308,** it is determined if each of the first and second responses **204a, 204b** are within a threshold of a reference response **206.** The reference response **206** is based on the respective manoeuvring request **202a, 202b** and/or the other of the acquired first and second responses **204a, 204b.** For example, the reference response **206** may be an expected response and/or a response including values that indicate proper function of a motion control system **110a-b, 120a-b, 130a-b.** For example, the reference response **206** may be a response to the manoeuvring request **202a, 202b** generated by a vehicle model, or a historical response from a properly functioning system. In some examples, the reference response **206** may use values included in the initial manoeuvring request **202a, 202b.** It will be appreciated that a reference response **206a** for the primary motion control system **110a, 120a, 130a** may be determined based on the first manoeuvring request **202a,** while a reference response **206b** for the secondary motion control system **110b, 120b, 130b** may be determined based on the second manoeuvring request **202b,** and, in the case that the manoeuvring requests **202a, 202b** are the same, the reference responses **206a, 206b** will be the same. Alternatively, the reference response **206** may be the response **204a, 204b** received from the other motion control system **110a-b, 120a-b, 130a-b.** If a response is within the threshold of the reference response **206,** it may be determined that the respective motion control system **110a-b, 120a-b, 130a-b** is functioning properly. If a response is outside the threshold of the reference response **206,** it may be determined that the respective motion control system **110a-b, 120a-b, 130a-b** is not functioning properly, and further action may be taken to diagnose the problem.

In the case of primary and secondary propulsion systems **110a-b,** in one example, it may be determined if accelerometer data in each of the responses **204a, 204b** is within a first threshold of an acceleration value included in the initial manoeuvring request. It may additionally or alternatively be determined if the accelerometer data in each of the responses **204a, 204b** are within a second threshold of each other. If neither response **204a, 204b** is within the first threshold, it may be determined that there is a systemic failure affecting both the primary and secondary propulsion systems **110a-b,** e.g. rolling radius or mechanical failures in common drive systems. If the responses **204a, 204b** are not within the second threshold of each other, it may be determined that there is a fault with either the primary propulsion system **110a** or the secondary propulsion system **110b,** e.g. mechanical failures in individual drive systems or faulty sensor inputs. In this case, the responses **204a, 204b** can each be compared to another reference response **206** (e.g. a response generated by a vehicle model, a historical response, or values included in the initial manoeuvring request) to determine in which propulsion systems **110a-b** the fault is present. In examples where the first and second manoeuvring requests **202a, 202b** are implemented simultaneously, if a combined response (e.g. a sum of accelerations applied by the respective propulsion systems **110a-b)** is not within a threshold of a reference response **206,** the propulsion systems **110a-b** may then be tested sequentially.

In the case of primary and secondary braking systems **120a-b,** in one example, it may be determined if accelerometer data in each of the responses **204a, 204b** is within a first threshold of a deceleration value included in the initial manoeuvring request. It may additionally or alternatively be determined if the accelerometer data in each of the responses **204a, 204b** are within a second threshold of each other. If neither response **204a, 204b** is within the first threshold, it may be determined that there is a systemic failure affecting both the primary and secondary braking systems **120a-b,** e.g. a wheel bearing issue, a stuck brake, etc. If the responses **204a, 204b** are not within the second threshold of each other, it may be determined that there is a fault with either the primary braking system **120a** or the secondary braking system **120b,** e.g. faulty or stuck control valves, air leaks in respective system circuits, or respective inertial measurement unit faults. In this case, the responses **204a, 204b** can each be compared to another reference response **206** (e.g. a response generated by a vehicle model, a historical response, or values included in the initial manoeuvring request) to determine in which braking systems **120a-b** the fault is present.

In the case of primary and secondary steering systems **130a-b,** in one example, it may be determined if steering angle data in each of the responses **204a, 204b** is within a first threshold of a steering angle value included in the initial manoeuvring request. It may additionally or alternatively be determined if the steering angle data in each of the responses **204a, 204b** are within a second threshold of each other. If neither response **204a, 204b** is within the first threshold, it may be determined that there is a systemic failure affecting both the primary and secondary steering systems **130a-b,** e.g. wheel alignment issues. If the responses **204a, 204b** are not within the second threshold of each other, it may be determined that there is a fault with either the primary steering system **130a** or the secondary steering system **130b,** e.g. calibration errors, actuator failures, problems in one or more hydraulic circuits that power parts the steering system **130a-b.** In this case, the responses **204a, 204b** can each be compared to another reference response **206** (e.g. a response generated by a vehicle model, a historical response, or values included in the initial manoeuvring request) to determine in which steering systems **130a-b** the fault is present.

In some examples, the manoeuvring requests **202a, 202b** may be applied in both forward and backward (reverse) directions. This can help to cancel out any effects of road inclination on the received responses **204a, 204b.** In some examples, the yaw rate of the vehicle **100** may be monitored throughout implementation of the manoeuvring requests **202a, 202b** to check whether there are any stuck wheels and/or if any axle is resulting in a pulling effect in one direction.

The method **300** allows the primary and secondary motion control systems **110a-b, 120a-b, 130a-b** to be crosschecked and calibrated if necessary. By using the secondary motion control system **110b, 120b, 130b** to crosscheck the primary motion control systems **110a, 120a, 130a** (and vice versa), systemic faults affecting all systems, as well as faults within individual subsystems, may be detected. As a result, the time needed prior to starting an automated driving mission, the risk of human errors, and the need for expert knowledge of the vehicle systems are reduced.

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system 400 may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
Example 1: A computer system (140, 160, 400) for verifying primary and secondary motion control systems (110, 120, 130) of an automated or semi-automated vehicle (100), the computer system (140, 160, 400) comprising processing circuitry (150, 170, 402) configured to: send a manoeuvring request (202a, 202b) to each of the primary motion control system (110a, 120a, 130a) and the secondary motion control system (110b, 120b, 130b); acquire a first response (204a) to the manoeuvring request (202a) for the primary motion control system (110a, 120a, 130a); acquire a second response (204b) to the manoeuvring request (202b) for the secondary motion control system (110b, 120b, 130b); and determine if each of the first and second responses (204a, 204b) are within a threshold of a reference response (206); wherein the reference response (206) is based on the respective manoeuvring request (202a, 202b) and/or the other of the acquired first and second responses (204a, 204b).
Example 2: The computer system (140, 160, 400) of example 1, wherein the primary and secondary motion control systems (110, 120, 130) comprise steering systems (130).
Example 3: The computer system (140, 160, 400) of example 2, wherein the manoeuvring request (202a, 202b) comprises a steering angle for the primary steering system (130a) that is equal in magnitude and opposite in direction to a steering angle for the secondary steering system (130b).
Example 4: The computer system (140, 160, 400) of example 2, wherein the manoeuvring request (202a, 202b) comprises a steering angle for the primary steering system (130a) that is equal in magnitude and direction to the steering angle for the secondary steering system (130b).
Example 5: The computer system (140, 160, 400) of any of examples 2 to 4, wherein the manoeuvring request (202a, 202b) comprises a steering angle for the front axle of the vehicle (100).
Example 6: The computer system (140, 160, 400) of example 1, wherein the primary and secondary motion control systems (110, 120, 130) comprise braking systems (120).
Example 7: The computer system (140, 160, 400) of example 6, wherein the manoeuvring request (202a, 202b) comprises a braking request for one of the primary and secondary braking systems (120a, 120b) and a subsequent braking request for using the other of the primary and secondary braking systems (120a, 120b).
Example 8: The computer system (140, 160, 400) of example 7, wherein the braking requests are to be implemented while the vehicle (100) is accelerating.
Example 9: The computer system (140, 160, 400) of example 1, wherein the primary and secondary motion control systems (110, 120, 130) comprise propulsion systems (110).
Example 10: The computer system (140, 160, 400) of any preceding example, wherein the acquired responses (204a, 204b) comprise information relating to one or more or of an implemented wheel speed, an implemented steering torque, an implemented steering angle, resultant accelerometer data, and resultant yaw rate data.
Example 11: The computer system (140, 160, 400) of any preceding example, wherein: a reference response (206a) for the primary motion control system (110a, 120a, 130a) is based on the manoeuvring request (202a) for the primary motion control system (110a, 120a, 130a) and/or the second response (204b); and a reference response (206b) for the secondary motion control system (110b, 120b, 130b) is based on the manoeuvring request (202b) for the secondary motion control system (110b, 120b, 130b) and/or the first response (204b).
Example 12: The computer system (140, 160, 400) of any preceding example, wherein the threshold comprises an absolute value or a value determined relative to the reference response (206).
Example 13: A vehicle (100) comprising the computer system (140, 160, 400) of any preceding example.
Example 14: A computer-implemented method (300) for verifying primary and secondary motion control systems (110, 120, 130) of an automated or semi-automated vehicle (100), the computer-implemented method (300) comprising: sending (302), by processing circuitry (150, 170, 402) of a computer system (140, 160, 400), a manoeuvring request (202a, 202b) to each of the primary motion control system (110a, 120a, 130a) and the secondary motion control system (110b, 120b, 130b); acquiring (304), by the processing circuitry (150, 170, 402), a first response (204a) to the manoeuvring request (202b) for the primary motion control system (1 10a, 120a, 130a); acquiring (306), by the processing circuitry (150, 170, 402), a second response (204b) to the manoeuvring request (202b) for the secondary motion control system (1 10b, 120b, 130b); and determining (308), by the processing circuitry (150, 170, 402), if each of the first and second responses (204a, 204b) are within a threshold of a reference response (206); wherein the reference response (206) is based on the respective manoeuvring request (202a, 202b) and/or the other of the acquired first and second responses (204a, 204b).
Example 15: The computer-implemented method (300) of example 13, wherein the primary and secondary motion control systems (110, 120, 130) comprise steering systems (130).
Example 16: The computer-implemented method (300) of example 15, wherein the manoeuvring request (202a, 202b) comprises a steering angle for the primary steering system (130a) that is equal in magnitude and opposite in direction to a steering angle for the secondary steering system (130b).
Example 17: The computer-implemented method (300) of example 15, wherein the manoeuvring request (202a, 202b) comprises a steering angle for the primary steering system (130a) that is equal in magnitude and direction to the steering angle for the secondary steering system (130b).
Example 18: The computer-implemented method (300) of any of examples 15 to 17, wherein the manoeuvring request (202a, 202b) comprises a steering angle for the front axle of the vehicle (100).
Example 19: The computer-implemented method (300) of example 14, wherein the primary and secondary motion control systems (110, 120, 130) comprise braking systems (120).
Example 20: The computer-implemented method (300) of example 19, wherein the manoeuvring request (202a, 202b) comprises a braking request for one of the primary and secondary braking systems (120a, 120b) and a subsequent braking request for using the other of the primary and secondary braking systems (120a, 120b).
Example 21: The computer-implemented method (300) of example 20, wherein the braking requests are to be implemented while the vehicle (100) is accelerating.
Example 22: The computer-implemented method (300) of example 14, wherein the primary and secondary motion control systems (110, 120, 130) comprise propulsion systems (110).
Example 23: The computer-implemented method (300) of any of examples 14 to 22, wherein the acquired responses (204a, 204b) comprise information relating to one or more or of an implemented wheel speed, an implemented steering torque, an implemented steering angle, resultant accelerometer data, and resultant yaw rate data.
Example 24: The computer-implemented method (300) of any of examples 14 to 23, wherein: a reference response (206a) for the primary motion control system (110a, 120a, 130a) is based on the manoeuvring request (202a) for the primary motion control system (110a, 120a, 130a) and/or the second response (204b); and a reference response (206b) for the secondary motion control system (110b, 120b, 130b) is based on the manoeuvring request (202b) for the secondary motion control system (110b, 120b, 130b) and/or the first response (204b).
Example 25: The computer-implemented method (300) of any of examples 14 to 24, wherein the threshold comprises an absolute value or a value determined relative to the reference response (206).
Example 26: A computer program product comprising program code for performing, when executed by processing circuitry (150, 170, 402), the computer-implemented method (300) of any of examples 14 to 25.
Example 27: A non-transitory computer-readable storage medium comprising instructions, which when executed by processing circuitry (150, 170, 402), cause the processing circuitry to perform the computer-implemented method (300) of any of examples 14 to 25.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (140, 160, 400) for verifying primary and secondary motion control systems (110, 120, 130) of an automated or semi-automated vehicle (100), the computer system (140, 160, 400) comprising processing circuitry (150, 170, 402) configured to:
send a manoeuvring request (202a, 202b) to each of the primary motion control system (110a, 120a, 130a) and the secondary motion control system (110b, 120b, 130b);
acquire a first response (204a) to the manoeuvring request (202a) for the primary motion control system (110a, 120a, 130a);
acquire a second response (204b) to the manoeuvring request (202b) for the secondary motion control system (110b, 120b, 130b); and
determine if each of the first and second responses (204a, 204b) are within a threshold of a reference response (206);
wherein the reference response (206) is based on the respective manoeuvring request (202a, 202b) and/or the other of the acquired first and second responses (204a, 204b).

2. The computer system (140, 160, 400) of claim 1, wherein the primary and secondary motion control systems (110, 120, 130) comprise steering systems (130).

3. The computer system (140, 160, 400) of claim 2, wherein the manoeuvring request (202a, 202b) comprises a steering angle for the primary steering system (130a) that is equal in magnitude and opposite in direction to a steering angle for the secondary steering system (130b).

4. The computer system (140, 160, 400) of claim 2, wherein the manoeuvring request (202a, 202b) comprises a steering angle for the primary steering system (130a) that is equal in magnitude and direction to the steering angle for the secondary steering system (130b).

5. The computer system (140, 160, 400) of any of claims 2 to 4, wherein the manoeuvring request (202a, 202b) comprises a steering angle for the front axle of the vehicle (100).

6. The computer system (140, 160, 400) of claim 1, wherein the primary and secondary motion control systems (110, 120, 130) comprise braking systems (120).

7. The computer system (140, 160, 400) of claim 6, wherein the manoeuvring request (202a, 202b) comprises a braking request for one of the primary and secondary braking systems (120a, 120b) and a subsequent braking request for using the other of the primary and secondary braking systems (120a, 120b).

8. The computer system (140, 160, 400) of claim 7, wherein the braking requests are to be implemented while the vehicle (100) is accelerating.

9. The computer system (140, 160, 400) of any preceding claim, wherein the acquired responses (204a, 204b) comprise information relating to one or more or of an implemented wheel speed, an implemented steering torque, an implemented steering angle, resultant accelerometer data, and resultant yaw rate data.

10. The computer system (140, 160, 400) of any preceding claim, wherein:
a reference response (206a) for the primary motion control system (110a, 120a, 130a) is based on the manoeuvring request (202a) for the primary motion control system (110a, 120a, 130a) and/or the second response (204b); and
a reference response (206b) for the secondary motion control system (110b, 120b, 130b) is based on the manoeuvring request (202b) for the secondary motion control system (1 10b, 120b, 130b) and/or the first response (204b).

11. The computer system (140, 160, 400) of any preceding claim, wherein the threshold comprises an absolute value or a value determined relative to the reference response (206).

12. A vehicle (100) comprising the computer system (140, 160, 400) of any preceding claim.

13. A computer-implemented method (300) for verifying primary and secondary motion control systems (110, 120, 130) of an automated or semi-automated vehicle (100), the computer-implemented method (300) comprising:
sending (302), by processing circuitry (150, 170, 402) of a computer system (140, 160, 400), a manoeuvring request (202a, 202b) to each of the primary motion control system (110a, 120a, 130a) and the secondary motion control system (110b, 120b, 130b);
acquiring (304), by the processing circuitry (150, 170, 402), a first response (204a) to the manoeuvring request (202a) for the primary motion control system (110a, 120a, 130a);
acquiring (306), by the processing circuitry (150, 170, 402), a second response (204b) to the manoeuvring request (202b) for the secondary motion control system (110b, 120b, 130b); and
determining (308), by the processing circuitry (150, 170, 402), if each of the first and second responses (204a, 204b) are within a threshold of a reference response (206);
wherein the reference response (206) is based on the respective manoeuvring request (202a, 202b) and/or the other of the acquired first and second responses (204a, 204b).

14. A computer program product comprising program code for performing, when executed by processing circuitry (150, 170, 402), the computer-implemented method (300) of claim 13.

15. A non-transitory computer-readable storage medium comprising instructions, which when executed by processing circuitry (150, 170, 402), cause the processing circuitry to perform the computer-implemented method (300) of claim 13.
